# NEUE EUROPÄISCHE PATENTSCHRIFT

(11) **EP 0 713 042 B2**
(45) Veröffentlichungstag und Bekanntmachung des Hinweises auf die Entscheidung über den Einspruch: **20.08.2003**
(45) Hinweis auf die Patenterteilung: 14.07.1999
(21) Anmeldenummer: 95118296.3
(22) Anmeldetag: 21.11.1995
(51) Int. Cl.: F16L 13/14, F16L 33/207

(54) **Verbundrohr-Verbindungsanordnung**
Connection arrangement for composite pipes
Raccord de tuyaux composites

(30) Priorität: 21.11.1994 DE 4441373
(43) Veröffentlichungstag der Anmeldung: 22.05.1996
(73) Patentinhaber: FRÄNKISCHE ROHRWERKE, GEBR. KIRCHNER GmbH & Co., D-97486 Königsberg (DE)
(72) Erfinder: Wirsing, Thomas, D-97483 Eltmann (DE); Rothlauf, Peter, D-97486 Königsberg (DE)
(74) Vertreter: Schwabe, Hans-Georg, Dipl.-Ing.

(56) Entgegenhaltungen:
- EP-A- 0 530 404
- WO-A-92/09840
- DE-U- 9 016 310
- DE-U- 9 110 998
- US-A- 1 926 270
- US-A- 2 177 095
- US-A- 3 885 819

## Beschreibung

Die Erfindung betrifft eine Verbundrohr-Verbindungsanordnung für Verbundrohre nach dem Patentanspruch 1.

Für Rohre mit mindestens einer Kunststoffschicht bzw. mehrschichtige Kunststoffrohre oder Verbundrohre sind seit längerem gattungsgemäße Rohrverbindungen bekannt. Eine derartige Rohrverbindung ergibt sich beispielsweise aus dem deutschen Gebrauchsmuster G 90 16 310.9 bzw. der WO 92/09840, die insbesondere für Verbundrohre ausgebildet ist. Diese bekannte Rohrverbindung besteht aus zwei Stützhülsen, über die jeweilige Verbundrohre geschoben werden, und einem in der Mitte, zwischen den beiden Stützhülsen einstückig mit den Stützhülsen ausgebildeten Bund, an den die aufgeschobenen Verbundrohre anstoßen. Über das aufgeschobene Verbundrohr wird eine Preßhülse geschoben, die in einem vorbestimmten Abstand gegenüber dem Bund gehalten werden muß. Sodann wird eine Preßzange um die Preßhülse, das Verbundrohr und die Stützhülse herumgelegt und die Preßbacken der Preßzange werden geschlossen, um die Preßhülse an vorbestimmten Stellen umfänglich zu verpressen, um dadurch das Verbundrohr an der Stützhülse bzw. der Rohrverbindung festzulegen.

Bei derlei Rohrverbindungen tritt jedoch das Problem auf, daß das auf die Stützhülse aufgeschobene Verbundrohr leicht verrutschen kann. Außerdem kann die Preßhülse ebenfalls leicht verrutschen, da die bekannte Rohrverbindung häufig an schlecht zugänglichen Stellen montiert bzw. verpreßt werden muß und die Preßzange darüber hinaus ein ganz erhebliches Gewicht aufweist und schwer handhabbar ist. Zusätzlich verwehrt die Preßzange bzw. deren Preßbacken den Blick auf den Bereich, in dem verpreßt wird. Eine Verpressung findet häufig an zwei radial um die Preßhülse angeordneten Bereichen statt, die axial voneinander beabstandet sind. Durch Verdrängung des Rohrwandmaterial zwischen den verpreßten Bereichen der Preßhülse tritt auch dort eine indirekte Verpressung auf.

Bei dieser bekannten Rohrverbindung kann zwar nach dem Verpreßvorgang geprüft werden, ob das anzuschließende Verbundrohr in der korrekten Stellung unmittelbar in Anlage an dem Bund sitzt, jedoch handelt es sich bei einer Preßverbindung um eine Einwegverbindung, die sich nur einmal verwenden läßt. Das heißt, es gibt keine Korrekturmöglichkeit und, sofern die Rohrverbindung nicht den erforderlichen Vorgaben entspricht, die für eine garantierte Dichtigkeit der ausgeführten Rohrverbindungen erforderlich sind, muß die Verbindung aufgetrennt werden, wobei in der Regel das Rohr und die Rohrverbindung beschädigt werden. Dies macht einen erheblichen Montageaufwand erforderlich, um insbesondere an schlecht zugänglichen Stellen in Leitungsschächten etc., Rohrverbindungen mit einer ausreichenden Qualität herzustellen.

Zusammenfassend ist also festzuhalten, daß es bei dieser bekannten Rohrverbindung nachteilig ist, daß die Anlage des anzuschließenden Verbundrohres am Bund und der korrekte Sitz der Preßhülse auf der Stützhülse der Rohrverbindung nicht mehr überprüfbar sind, wenn die Verpreßzange angesetzt worden ist.

Aus einem Prospekt der Firma biroduct ist ein Versuch bekannt, diesen Nachteil dadurch auszugleichen, daß die Preßzange an ihren Klemmbacken mit Justierklauen versehen wird, mittels derer die Preßzange in einem vorbestimmten Abstand zu dem Bund der Rohrverbindung gehalten wird, wobei die zu verpressende Preßhülse gleichzeitig in einer bestimmten Position gehalten werden kann.

Allerdings kann der korrekte Sitz des anzuschließenden Verbundrohres selbst auch hier erst nach der Verpressung der Preßhülse überprüft werden, indem die Bedienungsperson einen Kontrollblick auf den Zwischenraum zwischen dem Bund der Rohrverbindung und der verpreßten Preßhülse wirft.

Das DE-GM 91 10 998.1 befaßt sich mit eben dieser von der Firma biroduct vertriebenen Rohrverbindung und erläutert darüber hinaus eine ebenfalls erst nach der Verpressung sichtbare Kontrolleinrichtung an der Preßhülse. Die genannten Probleme werden auch in der zu dem genannten Gebrauchsmuster korrespondierenden EP 0 530 404 A1 erörtert.

In der US-A-1,926,270 ist eine Preßverbindung für Schläuche offenbart, die einem hohen Druck widerstehen können soll. Zu diesem Zweck ist eine Stützhülse für einen Schlauch in eine Schraubverbindung mit einem Anschlag eingeschraubt. Der Schlauch wird auf die Stützhülse aufgesetzt und bis an den Anschlag der Schraubverbindung aufgeschoben. Am Anschlag der Schraubverbindung ist ein herausragender bzw. hervorragender Abschnitt vorgesehen, unter dem sowohl der Schlauch als auch die Preßhülse zur Festlegung des Schlauches aus der Stützhülse geschoben werden. Im Anschlag ist eine Öffnung vorgesehen, um eine Druckentlastung durch diese Öffnung zu ermöglichen, so daß bei Auftreten eines Überdruckes die Verbindung nicht auseinander gesprengt wird, sondern durch die Relaxierung des Druckes die Verbindung insgesamt zusammengehalten werden kann. Ein Werkzeug wird während des Verpreßvorgangs eingesetzt, bei dem der hervorragende Abschnitt an dem Anschlag bzw. dem Bund der Verbindung radial einwärts gebogen wird, um dadurch die Preßhülse an der Schraubverbindung festzulegen.

Aus der US-A-2,177,095 ist eine Preßverbindung bekannt, die als einstückiger Gegenstand eine Schraubverbindung mit einer Stützhülse, einer Preßhülse und einem Bund zur Verfügung stellt. Die Preßhülse ist mit verschiedenen Ausnehmungen bzw. Bohrungen versehen, so daß bei dem Verpressungsvorgang, der gemäß dieser Druckschrift sehr intensiv und kraftaufwendig erfolgt, wanderndes Material von diesen Öffnungen aufgenommen werden kann, um eine ansonsten auftretende Längenänderung des Preßhülsenbereichs zu vermeiden. Während in der Druckschrift allgemein ausgesagt wird, daß die Öffnungen und Ausnehmungen zur Kompensation einer Längenänderung während des Verpreßvorgangs vollständig verschwinden sollen, zeigt eine Ausführungsform eine Verbindung im verpreßten Zustand, bei der noch die Öffnungen bzw. Ausnehmungen zu erkennen sind. Das hier eingesetzte Preßwerkzeug behindert ebenfalls eine Verwendung der Öffnungen zur Längenkompensation für eine Lagekontrolle des Schlauches.

Aus der W092/09840 ist eine Rohrverbindung bekannt, bei der eine separate Stützhülse nicht so weit aufgeschoben wird, daß sie in Anlage zu einem Anschlag an einem Bund dieser Rohrverbindung kommt. Es wird ein Abstand gelassen, über den die Lage des Rohres am Bund wenigstens nach dem Verpreßvorgang für die Preßhülse geprüft werden kann.

Aus der DE 90 16 310.9 U1 ist eine Rohrverbindung bekannt, wie sie herkömmlicherweise eingesetzt wird, wobei kaum eine Möglichkeit für die Lagekontrolle des Verbundrohres besteht.

Zusammenfassend kann zum Stand der Technik festgehalten werden, daß keine bekannte Rohrverbindung eine aktive Kontrolle bietet, ob die Preßhülse und der zu verbindende Schlauch bzw. das zu verbindende Verbundrohr vor, während und nach dem Verpreßvorgang in ihrer korrekten Position sind.

Es ist die Aufgabe der vorliegenden Erfindung, den Nachteilen des Standes der Technik weitgehendst Abhilfe zu verschaffen; insbesondere soll eine Rohrverbindung vorgeschlagen werden, die eine aktive Kontrollmöglichkeit bietet, so daß auch während des Verpreßvorgangs der korrekte Sitz sowohl des anzuschließenden Verbundrohres als auch der Preßhülse überprüft werden können.

Diese Aufgabe wird durch eine Verbundrohr-Verbindungsanordnung mit den im Patentanspruch 1 aufgeführten Merkmalen gelöst.

Zweckmäßige Ausführungsformen werden durch die in den Unteransprüchen aufgeführten Merkmale definiert.

Die mit der Erfindung zu erzielenden Vorteile beruhen darauf, daß der Bund der erfindungsgemäßen Rohrverbindung an seinem Außenumfang mindestens eine Ausnehmung bzw. Öffnung oder dergleichen aufweist, die an dem dem (bzw. den) Anschlußbereich(en) zugeordneten Randbereich des Bundes vorgesehen ist (bzw. sind), so daß die Anlage des Rohres bzw. der Preßhülse an dem Bund überprüfbar ist.

Mit der erfindungsgemäßen Rohrverbindung sind Verbundrohre aus Metallschichten und Kunststoffschichten anschließbar.

Wird ein Verbundrohr auf den Anschlußbereich, der eine Stützhülse aufweist, aufgeschoben, so daß es schließlich an dem Bund anliegt, ist die Lage des Rohres am Bund durch diese mindestens eine Öffnung bzw. Ausnehmung im longitudinalen Randbereich des Bundes überprüfbar. Eine Preßhülse läßt sich ebenfalls über die Stützhülse der Rohrverbindung so weit aufschieben, daß diese an der betreffenden Stirnseite des Bundes anliegt. Die Lage der Stirnseite der Preßhülse kann ebenfalls durch die Öffnung bzw. Ausnehmung überprüft werden. Wenn nun zum Verpressen der Preßhülse und zum Festlegen des anzuschließenden Verbundrohres eine Preßzange angelegt wird, ist der Bund dem Blick der Bedienungsperson nach wie vor ausgesetzt. Das heißt, auch wenn die Preßzange in ihrer Betätigungslage ist, kann die Bedienungsperson die Anlage sowohl des Rohres als auch der Preßhülse an der zugeordneten Stirnseite des Bundes durch Sichtkontakt überprüfen. Wird erkannt, daß das Rohr und/oder die Preßhülse aus der Sollage verschoben worden sind, so kann die Bedienungsperson noch vor der Betätigung der Preßzange diese wieder entfernen, um das Rohr und/oder die Stützhülse wieder in die Sollage zu bringen, ohne daß hierfür, wie beim Stand der Technik, die Zerstörung der Preßhülse, das erneute Ablängen des anzuschließenden Rohres etc., erforderlich wären.

Selbstverständlich kann über die mindestens eine vorgesehene Ausnehmung bzw. Öffnung auch nach dem Verpressen der Preßhülse der einwandfreie Sitz des Verbundrohres auf der Stützhülse bzw. auf der erfindungsgemäßen Rohrverbindung überprüft werden, so daß eine einwandfreie Verbindung und deren Dichtheit garantiert werden können. Erfindungsgemäß weist der Bund einen parallel zur Zylindersymmetrieachse erstreckten, aus der Stirnfläche des Bundes herausragenden Abschnitt auf, entweder in der Form eines separaten, ringförmigen Abschnitts oder in der Form eines mit dem Bund einstückig ausgebildeten Abschnitts, wobei die Ausnehmung bzw. Ausnehmungen oder Öffnung bzw. Öffnungen in dem Abschnitt vorgesehen sind.

Im ersteren Fall, wenn ein separater ringförmiger Abschnitt verwendet wird, könnte gegebenenfalls anstelle der Öffnungen bzw. Ausnehmungen am Außenumfang des Bundes der gesamte ringförmige Abschnitt aus einem transparenten Material ausgebildet sein. In diesem Falle würde die Stützhülse der Rohrverbindung so ausgebildet sein, daß eine etwaige Profilierung der Stützhülse um die in Axialrichtung der Rohrverbindung erstreckte Abmessung des Ringes zu dem Bund der Rohrverbindung verschoben wäre. Der Innendurchmesser des zusätzlichen ringförmigen Abschnittes wäre so dimensioniert, daß sich ein anzuschließendes Verbundrohr unter dem Ring bis an die Stirnseite des Bundes schieben ließe. Anschließend könnte die Preßhülse auf die Stützhülse aufgeschoben werden, bis die einander zugeordneten Stirnseiten des zusätzlichen separaten ringförmigen Abschnitts und der Preßhülse aneinander anliegen. Wird anschliessend die Preßzange in ihre Betätigungsstellung gebracht, so kann durch den durchsichtigen ringförmigen Abschnitt die Lage des Rohres am Bund und die Lage der Stützhülse an der zugordneten Stirnseite des separaten ringförmigen Abschnitts überprüft werden.

Sofern diese Ausgestaltung nicht verwendet wird, kann der separate ringförmige Abschnitt eine Ausnehmung, Bohrungen, Ausschnitte oder dergleichen derart aufweisen, daß die Lage des Rohres an der zugeordneten Stirnseite des Bundes vor, während und nach dem Verpressen der Preßhülse beobachtet werden kann.

Sofern der erfindungsgemäße ringförmige Abschnitt einstückig mit dem Bund ausgebildet ist, kann die Lage des Rohres vor, während und nach dem Verpressen ebenfalls über die durchgängigen Ausnehmungen bzw. Öffnungen oder dergleichen in dem zusätzlichen Abschnitt, dem Bund oder in beiden Teilen beobachtet werden. Soll auch die Lage der Preßhülse an der zugeordneten Stirnfläche des zusätzlichen Abschnittes überprüft werden, so ist es vorteilhaft, wenn die Öffnung bzw. Öffnungen oder Ausnehmungen für die Lageüberprüfung im Bereich der zugeordneten Stimseite des zusätzlichen Abschnittes bzw. über die gesamte axial erstreckte Dimension des zusätzlichen Abschnitts erstreckt sind.

Bei der erfindungsgemäßen Rohrverbindungsanordnung kann die entsprechende Dimensionierung des Außendurchmessers der Stützhülse und des Außendurchmessers der zusätzlichen separaten oder einstückig ausgebildeten ringförmigen Abschnittes so ausfallen, daß das an der erfindungsgemäßen Rohrverbindung festzulegende Rohr in den Zwischenraum zwischen der Stützhülse und dem zusätzlichen Abschnitt klemmend eingepreßt werden kann, so daß ein Verrutschen des festzulegenden Rohres nur auftreten kann, wenn relativ hohe Kräfte angreifen, die in Axialrichtung wirken. Vorteilhafterweise weist die Stützhülse bzw. der Anschlußbereich der erfindungsgemäßen Rohrverbindung an einem Bereich bzw. an verschiedenen Bereichen, an denen die Preßhülse in ihrer verpreßten Lage auf dem Anschlußbereich bzw. auf der Stützhülse verpreßt ist, umfängliche Erhöhungen bzw. Vertiefungen auf. Diese Vertiefungen in Form von Rillen, Graten bzw. Nuten oder dergleichen, die umfänglich verlaufen, werden, sobald die Preßhülse verpreßt ist, durch Rohrmaterial zumindest teilweise ausgefüllt. Dieser kraftschlüssige Eingriff führt dazu, daß in Axialrichtung der Rohrverbindung wirkenden Kräften, die auf das Rohr einen Zug ausüben, ein Hindernis entgegengesetzt wird. Darüber hinaus führt der Eingriff des über die Preßhülse angepreßten Rohrmaterials mit dieser Profilierung der Stützhülsen zu einem dichtenden Eingriff, so daß selbst bei hohem Druck in der Leitung auch ohne zusätzliche Dichtung, wie etwa eine O-Ringdichtung oder dergleichen, eine vollkommen dichte Verbindung zustandegebracht werden kann. Selbstverständlich können zusätzlich auch eine oder mehrere O-Ringdichtungen bzw. Dichtungen vorgesehen werden.

Die Profilierungen können zusätzlich noch, im Längsquerschnitt gesehen, eine Kontur aufweisen, die ein Aufschieben des Rohres begünstigt und einem Abziehen des Rohres entgegenwirkt. Hierzu kann ein derartiges Profil in der Richtung, in der das Rohr auf die Stützhülse aufgeschoben werden kann, abgeschrägt sein, und in der Richtung, in der das Rohr abgezogen werden kann, einen rechten Winkel oder einen spitzen Winkel mit der Oberfläche einschließen. Um das Aufschieben eines Rohres auf die Stützhülse weiter zu erleichtern, kann die Stützhülse an ihrer Stirnfläche leicht konisch zulaufend bzw. abgeschrägt ausgebildet sein.

Zusätzliche Vorteile ergeben sich, wenn der Anschlußbereich bzw. die Stützhülse an einem Bereich bzw. an Bereichen, an denen die Preßhülse in ihrer verpreßten Lage auf dem Anschlußbereich bzw. der Stützhülse unverpreßt ist, eine Rändelung, vorzugsweise eine Rändelung mit vertieften Spitzen aufweist, wobei die Spitzen zusätzlich zueinander versetzt ausgebildet sein können. Dabei können durch zwei radial um die Preßhülse angeordnete verpreßte Bereiche, die in axialer Richtung der Preßhülse voneinander beabstandet sind, Reaktionskräfte ausgelöst werden, die bewirken, daß sich auch in dem dazwischenliegenden unverpreßten Bereich, durch Verdrängen des Rohrwandmaterials, eine indirekte Verpressung ergibt. Dadurch wird ein Formschluß des Rohrwandmaterials mit der Rändelung erreicht, der u.a. zu einer Verdrehsicherung bzw. Dichtwirkung beiträgt. Durch diese Rändelung ist es möglich, Kräften bzw. Drehmomenten, die das auf der Stützhülse sitzende Rohr verdrehen wollen, einen Widerstand entgegenzusetzen. Sind die Spitzen der Rändelung vertieft, so drückt sich das Material des Rohres darüber hinaus insbesondere im verpreßten Zustand in die Rändelkontur ein, was eine zusätzliche Dichtwirkung ermöglicht. Durch den Versatz der Rändelungsspitzen zueinander, läßt sich die Ausbildung von Mikropfaden durch den Rändelungsbereich verhindern.

Um den Sitz des Rohres auf zwei gegenüberliegenden Seiten prüfen zu können, ist es vorteilhaft, wenn der Bund bzw. der zusätzliche Abschnitt zwei Ausnehmungen bzw. Öffnungen aufweist, die umfänglich um 180° zueinander versetzt angeordnet sind. Da die Rohre in der Regel mit einem Spezialwerkzeug abgelängt werden, ist es in der Regel gewährleistet, daß die Stirnfläche des Rohres in einer senkrecht zur Mittelachse des Rohres verlaufenden Ebene liegt. Insofern reicht es vollkommen aus, wenn höchstens zwei Ausnehmungen bzw. Öffnungen vorgesehen sind, mit denen der Sitz des Rohres an einander gegenüberliegenden Seiten an der Stützhülse überprüft wird. Selbstverständlich können auch weitere Ausnehmungen bzw. Öffnungen vorgesehen werden.

Wie vorstehend bereits ausgeführt worden ist, tritt hier leicht das Problem auf, daß die Preßhülse noch kurz vor dem Verpreßvorgang verrutscht. Um diesem entgegenzuwirken, kann die Preßhülse auch eine Rutschbremse aufweisen, beispielsweise indem die Preßhülse eine konische oder doppelkonische Ausbildung aufweist. Bei der doppelkonischen Ausführungsform weist die Preßhülse in der Mitte oder an ihren Enden einen geringfügig geringeren Innendurchmesser auf, so daß bestimmte Innenbereiche der Preßhülse auf das Rohr drücken, womit sich ein Verrutschen der Preßhülse wirksam verhindern läßt.

Die Rutschbremse kann in einfacher und vorteilhafter Weise auch dadurch realisiert werden, daß die Preßhülse wenigstens eine radial einwärts ausgerichtete Erstreckung aufweist.

Die erfindungsgemäße Rohrverbindung kann je nach Anwendung auf beiden Seiten des Bundes mit jeweiligen Anschlußbereichen bzw. Stützhülsen mit gleichen oder unterschiedlichen Außen- und/oder Innendurchmessem versehen sein.

Auf einer Seite des Bundes kann ein Kniestück oder eine Schraubkupplung oder dergleichen angeordnet sein.

Die erfindungsgemäße Rohrverbindung kann auch als T-Stück, Y-Stück oder dergleichen ausgebildet sein, um sämtlichen Anschlußbedürfnissen, die etwa auf dem Bau auftreten, gerecht werden zu können.

Es ist auch möglich, in den longitudinalen Bereich des Bundes der Rohrverbindung mindestens eine, beispielsweise eingelötete, eingepreßte oder eingeschweißte, Metallrohrleitung einzusetzen, um einen Übergang von einer Metallrohrleitung zu einer oder mehreren Rohrleitungen, die wenigstens eine Kunststoffschicht aufweisen, verwirklichen zu können. Dabei können, wie bereits mehrfach erwähnt, Rohre mit mindestens einer Kunststoffschicht und demzufolge auch mehrschichtige Kunststoffrohre bzw. Verbundrohre angeschlossen werden.

Um zu garantieren, daß die Preßhülse in der gewünschten Lage auf der Stützhülse zuliegen kommt und dort verpreßt wird, kann die Preßzange für die radial einwärts gerichtete Bewegung der Preßbacken mit einer Steuerkurve ausgebildet sein, die bewirkt, daß der Preßring vor dem Verpressen, bzw. nachdem bereits teilweise die Verpressung stattgefunden hat, einwärts in Richtung auf den Bund verschoben wird. Zur weiteren Erleichterung der Justage der Preßhülse auf der Stützhülse kann die Preßzange zusätzlich mit einer Justiereinrichtung versehen sein, beispielsweise mit Justierklauen, die mit dem Bund oder zusätzlichen Eingriffskonturen am Bund zusammenwirken können. Durch die Verbindung derartiger zusätzlicher Justierklauen mit einer Abstützung der Preßzange am Bund oder an zustätzlichen am Bund vorhandenen Profilen läßt sich auch auf besonders einfache Art und Weise eine Abstützung für die in Aufschieberichtung auf die Stützhülse durch die speziell ausgebildete Preßzange aufgebrachte Kraft, die die Preßhülse an den Bund der Rohrverbindung schieben bzw. pressen soll, gut abstützen.

Die erfindungsgemäße Rohrverbindung kann beispielsweise durch gängige Metallver- und -bearbeitungsverfahren, wie Gießen, Schmieden und Spanabheben, hergestellt werden, wobei die für die Überprüfung des Sitzes des Rohres am Bund bzw. die Überprüfung des Sitzes der Preßhülse erforderliche Öffnung bzw. Öffnungen oder Ausnehmungen durch einen separaten Schritt, beispielsweise durch Fingerfräsen, herstellbar ist. Andererseits könnten die Öffnung bzw. die Öffnungen oder Ausnehmungen auch bereits bei der Anwendung der genannten gängigen Verfahren vorgesehen werden, insbesondere in eine Guß- bzw. Spritzgußform mit integriert werden.

Die vorliegende Erfindung bietet in Kombination mit Merkmalen der Unteransprüche besondere Vorteile. So kann beispielsweise die Erfindung in Kombination mit den Merkmalen des zusätzlichen, einstückig mit dem Bund ausgebildeten Abschnitt ganz besonders bei der weitgehendsten Lösung der der Erfindung zugrundeligenden Aufgabe behilflich sein.

Nachfolgend wird die Erfindung anhand von bevorzugten und vorteilhaften Ausführungsbeispielen unter Bezugnahme auf die beigefügten Figuren näher erläutert. Dabei werden weitere Vorteile und Merkmale gemäß der vorliegenden Erfindung offenbart. Es zeigen:
- Fig. 1a und b: eine Ausführungsform gemäß der Erfindung in einer teilweisen Schnittdarstellung bzw. einer teilweisen Seitenansicht;
- Fig. 2: eine weitere Ausführung gemäß der Erfindung in einer Schnittansicht sowie in zwei axialen Draufsichten;
- Fig. 3: ein Winkel- bzw. Kniestück gemäß der vorliegenden Erfindung in einem Längsschnitt; und
- Fig. 4: ein gemäß der Erfindung ausgebildetes T-Stück in einer längsschnittlichen Darstellung.

In den Figuren sind Bestandteile, die einander entsprechen, die identisch sind oder zumindest funktionsgleich sind, mit gleichen oder entsprechenden Bezugszeichen gekennzeichnet.

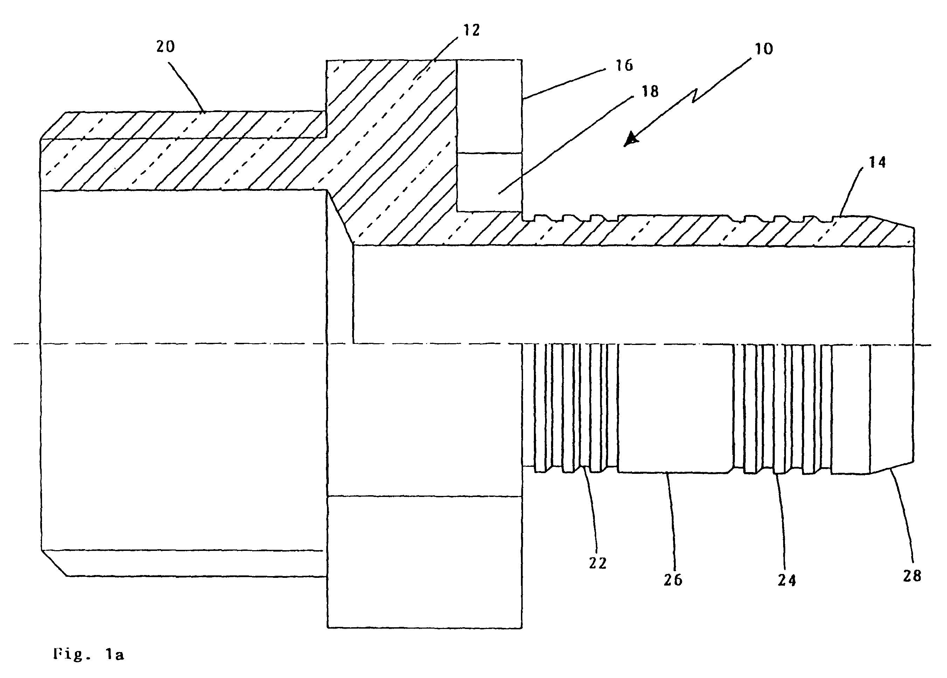

Die in Fig. 1a dargestellte Ausführungsform einer Rohrverbindung 10 weist einen Bund 12 und eine Stutzhülse 14 auf. Koaxial zur Stützhülse 14 ist eine Schraubverbindung 20 vorgesehen, um den erfindungsgemäßen Rohrverbinder 10 beispielsweise mit einem Heizkörper oder dergleichen verschrauben zu können. Der Bund 12 weist einen ringförmigen axial erstreckten Abschnitt 16 auf, der einen Teil der Stützhülse 14 überdeckt, so daß sich eine umfängliche Ausnehmung 18 ergibt, in die ein nicht dargestelltes Rohr hineingeschoben werden kann.

Die Stützhülse 14 weist mehrere unterschiedliche Profilierungen auf. In einem Bereich nahe dem Bund 12 weist die Stützhülse 14 umfängliche Rillierungen 22 bzw. Grate 24 auf. An diesen Bereich schließt ein glatter Bereich 26 an. In diesem Bereich kann vorteilhafterweise auch eine Rändelung vorgesehen werden.

Jenseits dieses beispielsweise gerändelten Bereichs 26 schließt entgegengesetzt zur Rohr-Aufschieberichtung ein weiterer profilierter Abschnitt an, indem wiederum Vertiefungen 22 und Erhöhungen 24 jeweils umfänglich vorgesehen sind. An der axialen Stirnfläche der Stützhülse 14 ist ein zulaufender Bereich 28 vorgesehen, der ein Aufschieben eines Rohres erleichtern soll.

Die Erhöhungen bzw. Vertiefungen 22, 24, etwa umfängliche Rillen und/oder Grate bilden zusammen mit dem in seiner korrekten Stellung befindlichen, aufgeschobenen Rohr jeweilige Dichteinrichtungen, die darüber hinaus in Verbindung mit der verpreßten Stützhülse (nicht dargestellt) das Rohr an der Stützhülse festlegen. Die (nicht dargestellte) Preßhülse wird in der Regel nur in den Bereichen verpreßt, in denen die erläuterten Profilierungen 22, 24 vorgesehen sind. Durch das Verpressen wird das Rohrmaterial in die umfänglichen Profilierungen bzw. Rillierungen 22 hineingepreßt, wodurch sich der besagte Kraftschluß und die besagte Dichtwirkung ergeben.

Da das über die Preßhülse an der Stützhülse 14 festgelegte Rohr durch die Profilierungen 22, 24 im wesentlichen nur gegen das Abziehen des Rohres von der erfindungsgemäßen Rohrverbindung 10 gesichert ist, ist es von Vorteil, wenn die Rändelung 26 in die Stützhülse 14 eingearbeitet wird, da über die Rändelung ein Verdrehen des Rohres nach erfolgter Verpressung auf der Stützhülse 14 verhindert werden kann, da die Rändelung eine Kontur aufweist, die im wesentlichen senkrecht zur Umfangsrichtung verläuft. Besonders vorteilhaft ist es, wenn die Rändelung so ausgebildet ist, daß die Spitzen in der Tiefe des Materials liegen bzw. vergraben sind, da diese Ausbildung dazu beiträgt, daß eine Undichtigkeit bewirkende Durchflußpfade entlang des gerändelten Abschnitts 26 entstehen können, wenn die Rändelung einen Versatz aufweist, d.h. das Rändelungsprofil beispielsweise um 30° aus der zu der Umfangsrichtung senkrecht verlaufenden Richtung ausgelenkt ist, lassen sich Leckagen noch wirksamer vermeiden.

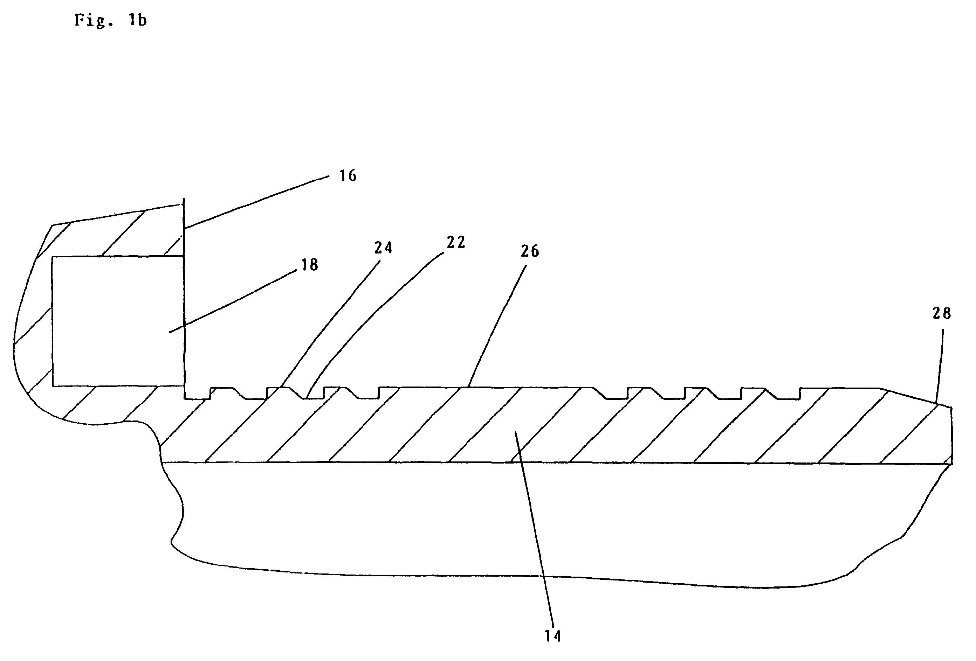

Die aus der Darstellung gemäß Fig. 1 nicht ersichtliche Ausnehmung bzw. Öffnung oder Öffnungen, die sowohl während eines Verpreßvorganges als auch davor und danach eine freie Sicht zumindest auf die Stirnfläche des Rohres und/oder der Stützhülse zuläßt, weist in etwa oder vorzugsweise genau in Axialrichtung der Stützhülse 14 bzw. der Rohrverbindung 10 die gleiche Abmessung auf, wie der in der gleichen Richtung erstreckte ringförmige Abschnitt 16.

In der Fig. 1 b ist ein mögliches Profil der Stützhülse 14 in einem vergrößerten Maßstab dargestellt. Die Form der Dicht- bzw. Halteprofile 22, 24 ist aus dieser Darstellung besonders gut ersichtlich. Die umfänglich verlaufenden Profile 24 erlauben ein erleichtertes Aufschieben des Rohres und erschweren das Abziehen des Rohres. Für die eigentliche Dichtwirkung ist diese Formgebung wesentlich.

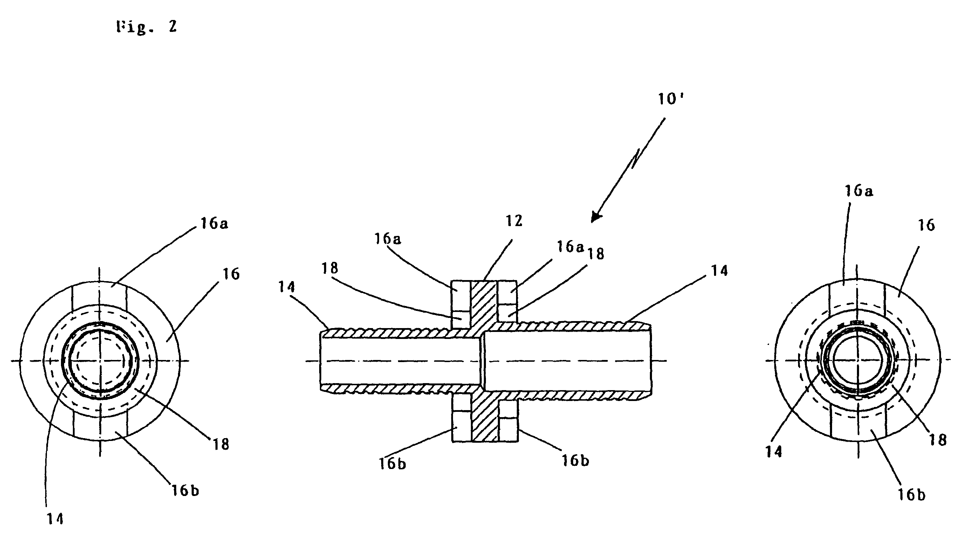

In der Fig. 2 ist eine weitere Ausführungsform einer Rohrverbindung 10' gemäß der Erfindung zu erkennen. Bei dieser Ausführungsform grenzen an den Bund 12 auf jeder Seite in Axialrichtung der Rohrverbindung 10' jeweilige Stützhülsen 14 an, wobei die linke Stutzhülse 14 einen größeren Innen- und Außendurchmesser hat als die rechte Stützhülse. Auf jeder Seite des Bundes 12 sind vorzugsweise 180° zueinander versetzte Ausnehmungen 16a, 16b vorgesehen, die einen freien Einblick auf die Stirnfläche des aufgeschobenen Rohres (nicht dargestellt), das an der zugeordneten Stirnfläche des Bundes 12 anliegt, zulassen. In die sich ergebende umfängliche Ausnehmung 18 wird das an der erfindungsgemäßen Rohrverbindung 10' festzulegende Rohr eingeschoben. Die Profilierung der Stützhülse 14 entspricht in diesem Falle vorzugsweise der bei der Erörterung der Fig. 1 besprochenen Ausgestaltung.

Die rechts und links der längsschnittlichen Darstellung wiedergegebenen axialen Draufsichten zeigen die in dem einstückig ausgebildeten ringförmigen Abschnitt 16 eingearbeiteten, beispielsweise eingefrästen, Ausnehmungen bzw. Öffnungen 16a, 16b.

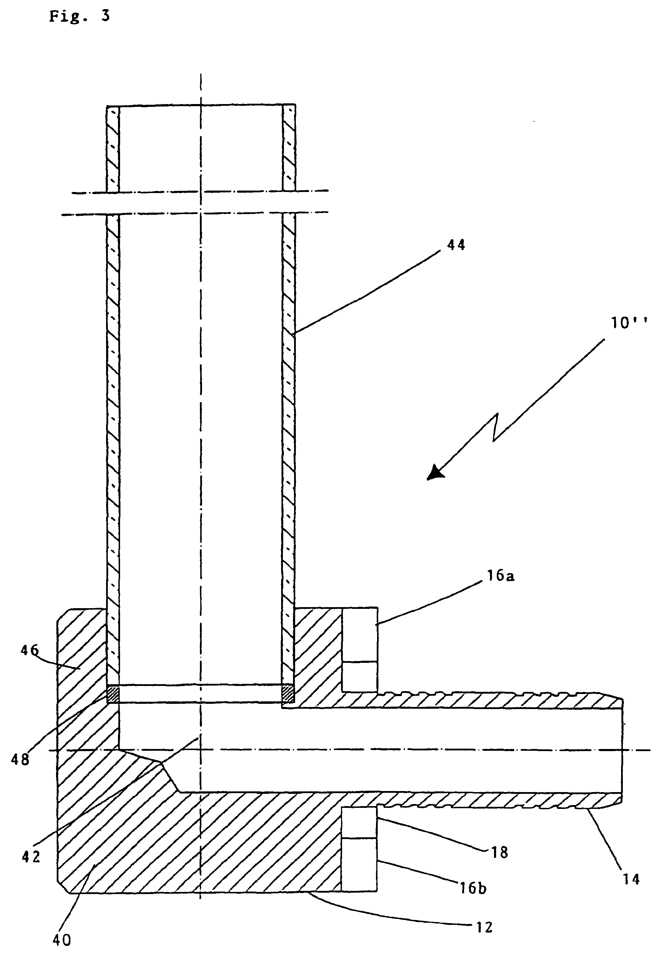

In der Fig. 3 ist ein Knie- bzw. Winkelstück 10° dargestellt, das mit einer erfindungsgemäß ausgebildeten Rohrverbindung versehen ist. Der Bund 12 gemäß der Ausführungsform 10" geht unmittelbar in ein Eck- bzw. Kniestück 40 über. Dieses Kniestück 40 weist eine ebenfalls in einem rechten Winkel verlaufende Leitung 42 auf, die einen Anschluß zwischen der Öffnung der Stützhülse 14 und der Anschlußöffnung ergibt, in die ein Rohr 44 in einem Rohrsitz 46 eingepaßt ist. In den Rohrsitz 46 ist im vorliegenden Falle eine Lotringeinlage 48 eingelegt, die dazu dient, nach dem Einschieben des Rohres 44, beispielsweise ein Kupferrohr, Messingrohr oder dergleichen, weich- oder hartverlötet zu werden. Natürlich kann hier auch geschweißt, geklebt oder gepreßt werden.

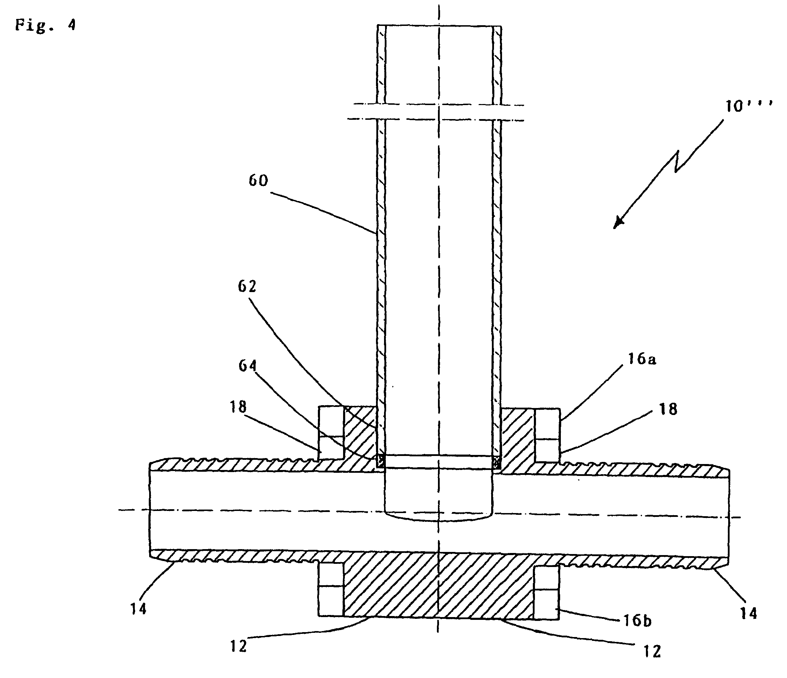

In der Fig. 4 ist eine weitere Ausführungsform 10"' der Rohrverbindung gemäß der vorliegenden Erfindung zu erkennen. Rechts und links von einem sehr breit ausgeführten Bund 12 sind erfindungsgemäß ausgebildete Rohrverbindungsabschnitte mit jeweiligen Stützhülsen 14, ringförmigen, umfänglichen Ausnehmungen 18 und Prüföffnungen bzw. Prüfausnehmungen 16a, 16b zu erkennen. In die Breitseite des relativ breit ausgeführten Bundes 12 ist eine Anschlußöffnung 62 eingearbeitet, in die ein Anschlußrohr 60 wiederum beispielsweise über eine Lotringeinlage 64 eingelötet werden kann.

Soll ein Verbindungsvorgang durchgeführt werden, wird ein Rohr beispielsweise auf die Stützhülse 14 gemäß Fig. 1a aufgeschoben, so daß das Ende des (nicht dargestellten) Rohres in der umfänglichen Ausnehmung 18 unter dem ringförmigen erstreckten Abschnitt 16 am Bund 12 sitzt. Anschließend wird die Preßhülse soweit aufgeschoben, daß sie bevorzugt an der Stirnseite des Abschnittes 16 anliegt. Der korrekte Sitz des Rohres an der Stirnseite des Bundes 12 kann über die Öffnungen bzw. Ausnehmen 16a, 16b (siehe beispielsweise Fig. 2) vor dem Verpressen der Preßhülse überprüft werden.

Sind das Rohr und die Preßhülse korrekt angeordnet, wird eine Preßzange an der Preßhülse angesetzt. Da der Bund 12 bzw. der Abschnitt 16 in diesem Stadium für den Blick der Bedienungsperson frei zugängig sind, kann die Bedienungsperson auch jetzt die Lage des Rohres und der Preßhülse über die Öffnungen bzw. Ausnehmungen 16a, 16b prüfen, wobei die umfängliche Ausnehmung 18 auch in Verbindung mit den Profilierungen das Rohr in einer optimalen Stellung halten können. Wird nun die Preßzange betätigt, so beginnt der Preßvorgang. Dieser Preßvorgang erfordert einen relativ langen Zeitraum, da die Preßzange über eine Hydraulik, über eine Gewindespindel oder dergleichen betätigt wird. Erkennt die Bedienungsperson während der ersten Augenblicke des Preßvorgangs ein Verrutschen des Rohres und/oder der Preßhülse, kann der Preßvorgang abgebrochen werden und die Lage des Rohres und/oder der Preßhülse können korrigiert werden. Ist der Preßvorgang fortgeschritten, verändert sich die korrekte Lage des Rohres und/oder der Preßhülse in der Regel nicht mehr, so daß eine weitere Beobachtung der korrekten Lage des Rohres und/oder der Preßhülse nicht mehr erforderlich wäre.

## Patentansprüche

1. Verbundrohr-Verbindungsanordnung (10, 10', 10", 10"'), für Verbundrohre mit den folgenden Merkmalen:
- mit mindestens einem Anschlussbereich für das Rohr,
- mit mindestens einem Bund am Anschlussbereich, an den das Rohr ansetzbar ist,
- mit mindestens einer Stützhülse (14) am Anschlussbereich, auf die das Rohr aufschiebbar ist,
- mit einer radial deformierend verpressbaren, zylindrischen Presshülse, wobei
- der Bund (12 ) an seinem Außenumfang mindestens eine Ausnehmung (16a, 16b) bzw. Öffnung oder durchsichtigen Bereich oder dergleichen aufweist, die bzw. der an dem Ansatz- oder Anschlussbereich bzw. den Anschlussbereichen (14) zugeordneten Randbereich des Bundes (12) vorgesehen ist bzw. sind, so dass die Lage eines Rohres überprüfbar ist, wobei
- der Bund (12) einen parallel zur Zylindersymmetrieachse verlaufenden aus der Stirnfläche des Bundes (12) herausragenden Abschnitt (16) aufweist, entweder in der Form eines separaten ringförmigen Abschnittes oder in der Form eines mit dem Bund (12) einstückig ausgebildeten Abschnittes (16), wobei die Ausnehmung(en) bzw. Öffnung(en) in mindestens einem der Abschnitte vorgesehen ist, und wobei
- der herausragende Abschnitt (16) relativ zu der Presshülse einen Durchmesser aufweist, so dass die Presshülse an einer Stirnfläche des herausragenden Abschnitts anliegt.

2. Anordnung nach Anspruch 1, **dadurch gekennzeichnet, daß** der separate ringförmige Abschnitt wengistens bereichsweise aus einem durchsichtigen Material aufgebaut ist.

3. Anordnung nach einem der Ansprüche 1 oder 2, **dadurch gekennzeichnet, daß** der jeweilige Abschnitt (16) einen Innendurchmesser aufweist, der gegenüber dem Außendurchmesser des Anschlußbereichs bzw. der Stützhülse (14) so dimensioniert ist, daß ein anzuschließendes Rohr mit Spiel, vorzugsweise stramm, in den Zwischenraum einschiebbar ist.

4. Anordnung nach einem der Ansprüche 1 bis 3, **dadurch gekennzeichnet, daß** der Anschlußbereich bzw. die Stützhülse (14) an einem Bereich bzw. an Bereichen, an denen die Preßhülse in ihrer verpreßten Lage auf dem Anschlußbereich verpreßt ist, umfängliche Erhöhungen bzw. Vertiefungen (22, 24) aufweist.

5. Anordnung nach einem der Ansprüche 1 bis 4, **dadurch gekennzeichnet, daß** der Anschlußbereich bzw. die Stützhülse (14) an einem Bereich (26) bzw. an Bereichen (26), an denen die Preßhülse in ihrer verpreßten Lage auf dem Anschlußbereich bzw. der Stützhülse (14) unverpreßt ist, eine Rändelung, vorzugsweise mit vertieften Spitzen aufweist, wobei die Spitzen zueinander versetzt ausgebildet sind.

6. Anordnung nach einem der Ansprüche 1 bis 5, **dadurch gekennzeichnet, daß** zwei Ausnehmungen bzw. Öffnungen (16a, 16b) umfänglich um 180° zueinander versetzt angeordnet sind, bzw. daß die Preßhülse eine Montage-Verrutsch-Verhinderungseinrichtung bzw. eine Rutschbremse aufweist, die ggf. durch eine innen konische oder doppelkonische Ausbildung der Preßhülse ausgeführt ist, die in einem in Längsrichtung der Preßhülse mittleren Bereich eine Einschnürung ergibt oder die an einem oder beiden Endbereichen der Preßhülse jeweilige Einschnürungen ergibt, wobei diese Einschnürungen einen geringfügig geringeren Innendurchmesser aufweisen, als das zu der Preßhülse passend dimensionierte Rohr.

7. Anordnung nach Anspruch 6, **dadurch gekennzeichnet, daß** die Rutschbremse mindestens eine radial einwärts ausgerichtete Erstreckung aufweist.

8. Anordnung nach einem der Ansprüche 1 bis 7, **dadurch gekennzeichnet, daß** auf beiden Seiten des Bundes (12) jeweilige Anschlußbereiche bzw. Stützhülsen (14) mit gleichen oder unterschiedlichen Außen- und/oder Innendurchmessern vorgesehen sind, wobei insbesondere auf einer Seite des Bundes (12) ein Kniestück oder eine Schraubkupplung (20) oder dergleichen angeordnet sein kann, und bevorzugt in dem longitudinalen Bereich bzw. in die Breitseite des Bundes (12) der Rohrverbindung mindestens eine, beispielsweise eingelötete, eingepreßte oder eingeschweißte Metallrohrleitung (60, 44) eingesetzt ist.

## Claims

1. Composite pipe connection arrangement (10, 10', 10", 10"'), for composite pipes with the following features:
- having at least one connecting region for the pipe,
- having at least one collar on the connecting region on which the pipe can be set,
- having at least one support sleeve (14) on the connecting region onto which the pipe can be pushed,
- with a radially deforming pressable, cylindrical press sleeve in which arrangement
- the collar (12) has on its outer periphery at least one recess (16a, 16b) or opening or transparent region or the like, which is or are provided on the edge region of the collar (12) associated with the placement region or connecting region or connecting regions (14) so that the position of a pipe can be checked, in which arrangement
- the collar (12) has a section (16) extending parallel to the axis of symmetry of the cylinder and protruding from the end surface of the collar (12), either in the form of a separate annular section or in the form of a section integrally formed with the collar (12), the recess(es) or opening(s) being provided in at least one of the sections, and in which arrangement
- the section (16) projecting relative to the press sleeve has a diameter such that the press sleeve is in contact with an end surface of the projecting section.

2. Arrangement according to Claim 1, **characterized in that** the separate annular section is constructed of a transparent material in at least some regions.

3. Arrangement according to one of Claims 1 or 2, **characterized in that** the respective section (16) has an internal diameter which is dimensioned relative to the external diameter of the connection region or the support sleeve (14) in such a way that a pipe to be connected can be pushed into the intermediate space with clearance, preferably tightly.

4. Arrangement according to one of Claims 1 to 3, **characterized in that** the connection region or the support sleeve (14) has peripheral elevations or depressions (22, 24) on a region or on regions at which the press sleeve is pressed onto the connecting region in its pressed position.

5. Arrangement according to one of Claims 1 to 4, **characterized in that** the connecting region or the support sleeve (14) has knurling, preferably with deeper points, at a region (26) or at regions (26) at which the press sleeve is not pressed in its pressed position on the connecting region or the support sleeve (14), the peaks being configured offset relative to one another.

6. Arrangement according to one of Claims 1 to 5, **characterized in that** two recesses or openings (16a, 16b) are peripherally offset relative to one another by 180° or that the press sleeve has an assembly slip prevention device or a slip brake, which may be configured by means of an internal conical or double conical configuration of the press sleeve, which configuration provides a contraction in a central region in the longitudinal direction of the press sleeve or which provides respective contractions at one or both end regions of the press sleeve, these contractions having a slightly smaller internal diameter than the pipe dimensioned to match the press sleeve.

7. Arrangement according to Claim 6, **characterized in that** the slip brake has at least one extension directed radially inwards.

8. Arrangement according to one of Claims 1 to 7, **characterized in that** respective connection regions or support sleeves (14) with the same or different external and/or internal diameters are provided on both sides of the collar (12), it being possible to arrange a knee-piece or a screw connection (20) or the like particularly on one side of the collar (12), and at least one, preferably soldered, pressed-in or welded-in metal pipe (60, 44) is preferably inserted in the longitudinal region or in the side surface of the collar (12) of the pipe connection.

## Revendications

1. Dispositif de raccord (10,10',10",10"') pour tuyaux composites, possédant les caractéristiques suivantes:
- avec au moins une zone de jonction pour le tuyau,
- avec au moins un collet dans la zone de jonction, auquel le tuyau peut être abouté,
- avec au moins une douille de soutien (14) dans la zone de jonction, sur laquelle le tuyau peut être engagé,
- avec une douille de pression cylindrique compressible à déformation radicale, raccord dans lequel
- le collet (12) présente, sur sa périphérie extérieure, au moins un évidement (16a, 16b) ou ouverture ou zone transparente ou similaire, prévue dans la zone de bordure du collet (12) associée à la zone ou aux zones (14) d'aboutement ou de jonction, de façon telle que la position d'un tuyau puisse être contrôlée, et dans lequel
- le collet (12) présente une portion (16) faisant saillie sur la face frontale du collet (12), parallèlement à l'axe de symétrie du cylindre, sous forme soit d'une portion annulaire séparée, soit d'une portion (16) solidaire du collet (12), l'évidement ou les évidements ou ouverture(s) étant prévu(es) dans au moins l'une des portions, et dans lequel
- la portion saillante (16) présente, par rapport à la douille de pression, un diamètre tel que la douille de pression prend appui sur une face frontale de la portion saillante.

2. Dispositif selon la revendication 1, **caractérisé en ce que** la portion annulaire séparée est fabriquée, au moins dans certaines zones, dans un matériau transparent.

3. Dispositif selon l'une des revendications 1 ou 2, **caractérisé en ce que** la portion concernée (16) présente un diamètre intérieur calibré de façon telle, par rapport au diamètre extérieur de la zone de jonction ou de la douille de soutien (14), qu'un tuyau à raccorder peut être engagé avec du jeu, de préférence sans jeu, dans l'espace intermédiaire.

4. Dispositif selon l'une des revendications 1 à 3, **caractérisé en ce que** la zone de jonction ou la douille de soutien (14) présente des reliefs ou des creux (22, 24) périphériques dans une ou des zones, dans lesquelles la douille de pression est pressée à l'état comprimé sur la zone de jonction.

5. Dispositif selon l'une des revendications 1 à 4, **caractérisé en ce que** la zone de jonction ou la douille de soutien (14) présente un moletage, de préférence avec des pointes produites par creusure, dans une ou des zones (26), dans lesquelles la douille de pression n'est pas pressée à l'état comprimé sur la zone de jonction ou la douille de soutien (14), lesdites pointes étant décalées entre elles.

6. Dispositif selon l'une des revendications 1 à 5, **caractérisé en ce que** deux évidements ou ouvertures (16a, 16b) sont décalés périphériquement entre eux de 180°, et **en ce que** la douille de pression présente un dispositif s'opposant au décentrage lors du montage, ou frein antidécentrage, éventuellement matérialisé par une configuration conique ou biconique de la douille de pression, qui se traduit par un rétrécissement dans une zone médiane dans le sens de la longueur de la douille de pression, ou qui donne des rétrécissements respectifs dans l'une ou dans les deux zones d'extrémité de la douille de pression, ces rétrécissements présentant un diamètre intérieur légèrement plus petit que le tuyau d'un calibre adapté à la douille de pression.

7. Dispositif selon la revendication 6, **caractérisé en ce que** le frein antidécentrage présente au moins une portée orientée radialement vers l'intérieur.

8. Dispositif selon l'une des revendications 1 à 7, **caractérisé en ce que** sur les deux faces du collet (12), on a prévu des zones de jonction ou des douilles de soutien (14) respectives de diamètres extérieurs et/ou intérieurs identiques ou différenciés, raccord dans lequel une face, en particulier, du collet (12) peut comporter un coude ou un raccord fileté (20) ou similaire, et où au moins une conduite tubulaire métallique (60, 44), par exemple rapportée par brasage, emmanchée à force ou rapportée par soudage, est insérée de préférence dans la zone longitudinale ou face large du collet (12).
